# EUROPEAN PATENT SPECIFICATION

(11) **EP 0 566 191 B1**
(45) Date of publication and mention of the grant of the patent: **19.01.2000**
(21) Application number: 93201024.2
(22) Date of filing: 07.04.1993
(51) Int. Cl.: G01T 1/40, G01N 23/223

(54) **X-ray analysis apparatus with pulse amplitude shift correction**
Röntgenanalysegerät mit Impulsamplitudenverschiebungskorrektur
Appareil d'analyse à rayons X à correction par déclage d'amplitude d'impulsion

(30) Priority: 15.04.1992 EP 92201072
(43) Date of publication of application: 20.10.1993
(73) Proprietor: Koninklijke Philips Electronics N.V., 5621 BA Eindhoven (NL)
(72) Inventor: Bolk, Hendrik Johannes Jan, NL-5656 AA Eindhoven (NL); Zielk, Georges Charles Petronella, NL-5656 AA Eindhoven (NL)
(74) Representative: Schouten, Marcus Maria

(56) References cited:
- EP-A- 0 090 465
- DE-A- 2 703 562
- US-A- 3 790 792

## Description

The invention pertains to an x-ray analysis apparatus according to the preamble of Claim 1.

An x-ray analysis apparatus of said kind is described in the European Patent EP 0 090 465.

In the x-ray analysis apparatus described in the cited reference, circuitry is provided for automatic correction of pulse amplitude shifts.

In particular in a gas ionisation x-ray detector comprising a gas-filled detector cell pulse amplitude shifts occur when the count rate increases. As it is discussed in 'Principles and practice of x-ray spectrometric analysis', 2nd ed. by E.P. Bertin, Ch. 8.1.8, pulse amplitude shifts are predominantly due to variations in the natural amplification of the x-ray gas ionisation detector, but can also result from thermal drift. At increasing count rates, i.e. increasing x-ray intensity, the pulse-height distribution shifts to lower average pulse-height. That is, at increasing count rates a seemingly decreasing energy of incident x-ray photons is measured. Albeit to a lesser extent as compared to gas ionisation detectors alternative x-ray detectors such as semiconductor x-ray detectors or scintillation x-ray detectors also suffer from pulse amplitude shifts at increasing count rates. The resulting amplitude shifts may lead to the occurrence of measurement errors which will adversely affect the accuracy of the analysis.

In the said European Patent EP 0 090 465 an x-ray analysis apparatus is disclosed in which the above mentioned problem of decreasing pulse amplitudes is solved by defining equally wide amplitude windows aside of the peak wavelength and counting the number of pulses that fall into each window. Because of the symmetrical peak shape these numbers should be equal. If these numbers are not equal, this situation indicates that the pulse hight is not correct and a correction signal is derived from the discrimination between the pulse numbers. This correction signal is applied to the control input of a pulse amplifier connected between the output of the detector and the further signal processing circuitry of the analysis apparatus, as a result of which the gain of the pulse amplifier is adjusted and a pulse amplitude shift correction is thereby provided.

However, the circuitry in said apparatus is suitable only for application in conjunction with single-channel pulse analyzing means and it is difficult and cumbersome to adjust the circuitry of this known apparatus to another wave length channel.

It is an object of the invention to provide an x-ray analysis apparatus having automatic pulse amplitude shift correction in conjunction with multi-channel pulse analysis for automatic correction of positioning pulse height distributions.

To achieve this, the x-ray analysis apparatus of the invention is characterised as defined in the characterizing portion of Claim 1.

In a preferred embodiment of an x-ray analysis apparatus in accordance with the invention the window circuit means comprises one of several alternative components: a random access memory, or a programmable read-only memory, or a programmable logical circuit.

Pulse amplitude shifts are detected by comparing a high-energy part to a low-energy part of a peak in a pulse-height distribution. A difference in count rates pertaining to a low-energy part and to a high energy part, respectively, of a peak in a pulse-height distribution indicates a pulse-amplitude and a difference between said count rates provides a correction signal for adjusting the pulse-counting amplification by means of the controllable pulse amplifier. Count rates pertaining to high-energy parts and to low-energy parts in a peak in a pulse-height distribution are formed from count rates in relevant channels by way of connecting relevant channels pertaining to high-energy parts and to low-energy parts, respectively, of a peak ill a pulse-height distribution, to relevant outputs of the signal generator. To that end , signal generator is provided, comprising a first and a second output, for converting signals incident at the input of the signal generator into signals existing at the outputs. This can be achieved electronically by means of several alternative components such as a random access memory, or a programmable read-only memory, or a programmable logical circuit.

In a preferred embodiment of an x-ray analysis apparatus in accordance with the invention said signal generators are constituted by frequency-to-amplitude converters, and the comparator circuit is constituted by a differential integrator.

Comparison of pulse-frequency signals is carried out it the present preferred embodiment by converting said pulse-frequency by means of a first and a second frequency-to-amplitude converter into signal amplitudes and subsequently subtracting said signal amplitudes by means of a differential integrator. An output signal produced by the differential integrator is equal to a difference of signal amplitudes generated by a the first and second frequency-to-amplitude converter, respectively. Said output signal of the differential amplifier is employed as a correction signal for the controllable pulse amplifier.

In a further preferred embodiment of an x-ray analysis apparatus in accordance with the invention said signal generators are constituted by a first counter operating in an ascending way, a second counter operating in a descending way, and an integration circuit.

Comparison of pulse-frequency signals is carried out digitally in the present preferred embodiment by converting said pulse-frequency by means of a first and a second counter into counts, the first counter counting ascendingly the second counter descendingly and subsequently forming a difference of said counts by means of an integration circuit. An output signal produced by the integration circuit is equal to a difference of counts generated by a the first and second counter, respectively. Said output signal of the differential amplifier is employed as a correction signal for the controllable pulse amplifier.

In a further preferred embodiment of an x-ray analysis apparatus in accordance with the invention the detector reading circuit means comprise a count rate switch for activating said comparator circuit in dependence of said pulse-frequency signals exceeding a threshold.

When an x-ray analysis is performed for an energy range where only low count rates are produced by the detector, then there pulse amplitude shifts are absent, because at low rates of incidence of x-ray photons no weakening by space charges occurs of the applied electric field in the gas ionisation detector. Moreover, applying pulse amplitude shift correction at low count rates has as a drawback that operation of the x-ray analysis apparatus becomes unstable. Therefore, a preferred embodiment of an x-ray analysis apparatus in accordance with the invention comprises a count rate switch for activating pulse shift correction when the count rate exceeds a predetermined value.

A further preferred embodiment of an x-ray analysis apparatus in accordance with the invention is characterised in that the analog-to-digital converter is a Flash-analog-to-digital converter.

For satisfactory operation at high count rates the time that is consumed by converting the analog signal amplitudes generated by the detector into digital signals is preferably reduced. This is achieved by employing a Flash-analog-to-digital converter for rapidly converting analog signal amplitudes generated by the detector into digital signals.

These and other aspects of the invention will become apparent from and elucidated with reference to the embodiments described hereinafter and with reference to the accompanying drawing.
Figure 1 shows diagrammatically an x-ray analysis apparatus employing multi-channel pulse analysis and having automatic pulse amplitude shift correction of a pulse-height distribution.
Figure 2 shows an example of a pulse-height distribution to be measured.
Figure 3a shows a block diagram of an embodiment of a circuit for automatic pulse amplitude shift correction.
Figure 3b shows a block diagram for another embodiment of a circuit for automatic pulse amplitude shift correction.

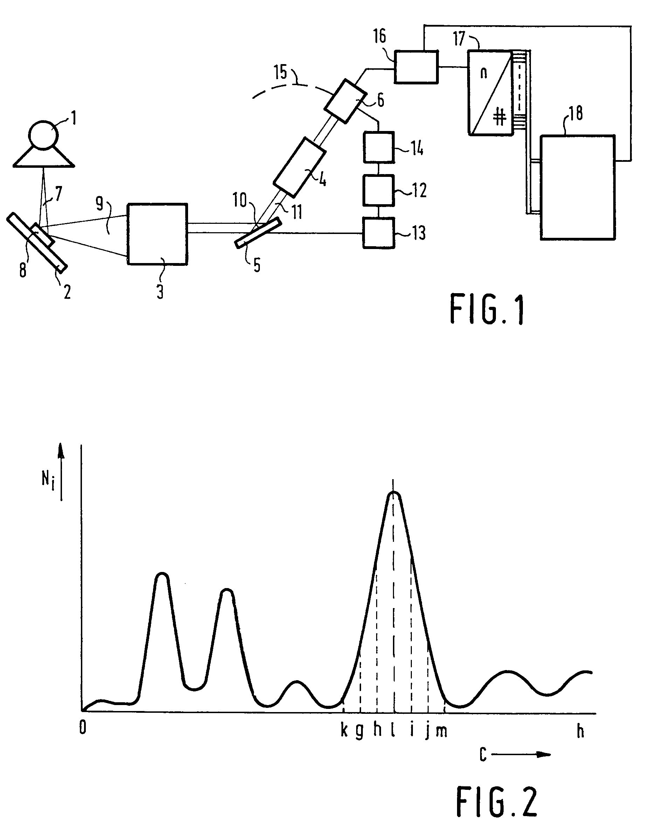

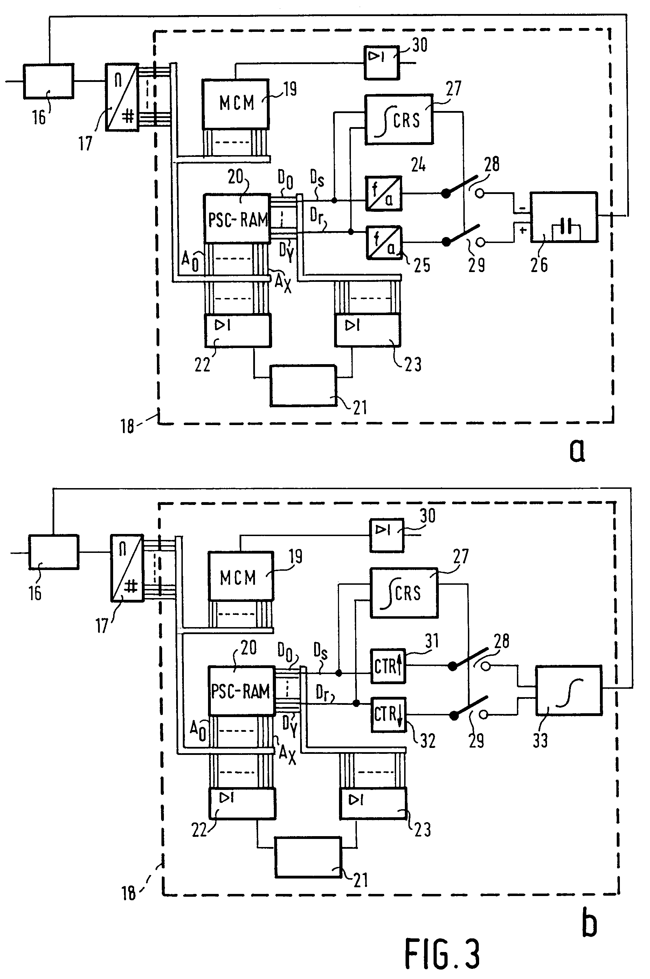

An x-ray analysis apparatus shown in Figure 1 comprises an x-ray source 1, a sample holder 2, collimators 3 and 4, an analyzing crystal 5 and an x-ray detector 6. Notably, the x-ray detector 6 is a gas ionisation detector. An x-ray beam 7 is incident on a sample 8 and causes x-ray fluorescence to be emitted by the sample. A fluorescence x-ray beam 9 is incident *via* the collimator 3 on a surface 10 of the analyzing crystal 5, after which a further x-ray beam 11 reflected according to Bragg reflection therefrom reaches the x-ray detector 6 *via* the collimator 4. By way of a drive motor 12 and a transmission gear 13 the analyzing crystal is at option rotated about an axis perpendicular to the plane of the drawing. By means of this rotation the energy of the x-ray beam incident on the x-ray detector is selected within a narrow range. The motor 12, acting *via* a transmission gear 14, causes a rotation of the detector which matches the rotation of the crystal, likewise about an axis at right angles to the plane of the drawing. Due to this rotation, the detector is moved along an arc of a circle 15. The analog signal amplitudes generated by the detector are controlled by a gain control circuit 16. Subsequently said analog signal amplitudes generated by the detector are converted into a digital representation by an analog-to-digital converter 17. The signal amplitude of a signal generated by the detector is in correspondence with an energy of an x-ray photon incident on the detector. Thus, a frequency distribution of amplitudes of signals generated by the detector corresponds to an energy distribution of x-ray photons incident on the detector. Said frequency distribution of amplitudes of signals will be referred to hereinafter as a pulse-height distribution. The digital signal from the analog-to-digital converter 17 is processed by detector reading circuit means 18 that will be further discussed hereinafter with reference to Figure 3.

In Figure 2 an example of a pulse height distribution is shown. As a function of count rate *C*, the number *N*_{*i*} of pulses corresponding to said energy is shown.

Figure 3a shows a more detailed block circuit diagram of an embodiment of a detector reading circuit for an x-ray analysis apparatus in accordance with the invention. A digital signal provided by the analog-to-digital converter 17 is supplied to a multi-channel memory 19. For high-speed operation of the detector reading circuit, the analog-to-digital converter is a Flash-ADC. A channel number of the multi-channel memory corresponds to a narrow range of values for signal amplitudes of signal amplitudes generated by the detector; the width of said range being determined by the ratio of a predetermined width of a range of x-ray energies relevant for performing an x-ray analysis to a number of channels of the multi-channel memory. Tendering a digital signal to the multi-channel memory has as an effect that a value stored in a relevant channel of the multi-channel memory is increased by one unit, the relevant channel being in correspondence with the amplitude of the signal generated by the detector. Correspondingly, a channel number of the multi-channel memory corresponds to a narrow range of values of energies of x-ray photons detected by the x-ray detector. Said digital signal is also provided to the addressing lines of the pulse-shift-correction random access memory (PSC-RAM) 20, the PSC-RAM comprising addressing lines indicated as *A*_{*0*}*-A*_{*X*} and comprising datalines indicated as *D*_{*0*}*-D*_{*Y*}. The PSC-RAM is programmed so as to correlate groups of addressing lines with predetermined datalines. The programming of the PSC-RAM is performed using a micro-processor 21 that is to be connected to the detector reading circuit for programming the PSC-RAM, indicating addresses by way of a first buffer circuit 22 and supplying data by means of a second buffer circuit 23. As an example, the PSC-RAM is programmed as follows:
Addresses in the range *A*_{*0*} *- A*_{*k*} relate to datalines *D*_{*r*} and *D*_{*s*}, datalines *D*_{*r*} and *D*_{*s*} both containing the value 0. That is, whenever signals are supplied to addresses in the range *A*_{*0*}*-A*_{*k*}, none of the datalines *D*_{*r*} and *D*_{*s*} produces a signal.
Addresses in the range *A*_{*k*} *- A*_{*l*} relate to datalines *D*_{*r*} and *D*_{*s*}, data-line *D*_{*r*} containing the value 1 and *D*_{*s*} containing the value 0. That is, whenever signals are supplied to addresses in the range *A*_{*k*}*-A*_{*l*}, a short (e.g. approximately 50 ns) signal pulse of a predetermined amplitude is produced by data-line *D*_{*r*} and no signal is produced by data-line *D*_{*s*}.
Addresses in the range *A*_{*l*}*-A*_{*m*} relate to datalines *D*_{*r*} and *D*_{*s*}, data-line *D*_{*r*} containing the value 0 and Dₛ containing the value 1. That is, whenever signals are supplied to addresses in the range *A*_{*l*}*-A*_{*m*}, a short (e.g. approximately 50 ns) signal pulse of a predetermined amplitude is produced by data-line *D*_{*s*} and no signal is produced by data-line *D*_{*r*}.
Addresses in the range *A*_{*m*}*-A*_{*h*} relate to datalines *D*_{*r*} and *D*_{*s*}, datalines *D*_{*r*} and *D*_{*s*} both containing the value 0. That is, whenever signals are supplied to addresses in the range *A*_{*m*}*-A*_{*h*}, none of the datalines *D*_{*r*} and *D*_{*s*} produces a signal.

The addresses *A*_{*0*} and *A*_{*h*} correspond to channels relating the lowest and to the highest x-ray energy, respectively that are present in a relevant spectral range. The address *A*_{*l*} corresponds to a channel relating to an energy where a pulse-height distribution at issue has a local maximum, i.e. an energy corresponding substantially to a centre of a peak in a pulse-height distribution. The energies at edges of a peak for which the address *A*_{*l*} corresponds to a centre correspond to addresses *A*_{*k*} and *A*_{*m*}, respectively.

The operation of pulse-shift correction for the pulse height distribution by an embodiment of an x-ray analysis apparatus in accordance with the invention can now be further discussed. Tendering a digital signal to the PSC-RAM has as an effect that signal pulses are produced by datalines *D*_{*r*} and *D*_{*s*}. The rate of signal pulses produced by datalines *D*_{*r*} and *D*_{*s*} correspond to the rate of incidence of x-ray photons having energies pertaining to addressing lines in the ranges *A*_{*k*}*-A*_{*l*}, and *A*_{*l+1*}*-A*_{*m*}, respectively. That is, datalines *D*_{*r*} and *D*_{*s*} produce pulse-frequency signals in correspondence with integrated pulse rates in a low-energy and in a high-energy part of a peak in the pulse-height distribution; said peak being determined by selection of addressing lines *A*_{*k*}*,A*_{*l*} and *A*_{*m*}. Output thus provided by the PSC-RAM will be called pulse-frequency signals hereinafter. Said pulse-frequency signals provided by datalines *D*_{*r*} and *D*_{*s*}, respectively are converted into signal amplitudes, notably voltages, by way of frequency-to-amplitude converters 24, 25. Said signal amplitudes are subsequently subtracted from one another by means of a subtraction means, notably a differential integrator 26. Finally, said differential integrator provides a correction signal for adjusting amplification of signals generated by the detector, by means of the gain control circuit 16 in accordance to the frequency signals from the first frequency-to-amplitude converter 24 and from the second frequency-to-amplitude converter 25, respectively, being substantially different.

In another mode of operation of an embodiment of a detector reading circuit suited for an x-ray analysis apparatus in accordance with the invention, pulse-frequency signals are formed pertaining to count-rates of a high-energy portion and a low-energy portion being non-adjacent to each other, of a peak in the pulse-height distribution. To that end, the PSC-RAM 20 is programmed such that addresses in the range of *A*_{*g*} and *A*_{*h*} relate to data lines *D*_{*r*} and *D*_{*s*}, dataline *D*_{*r*} containing the value 1, dataline *D*_{*s*} containing the value 0, and addresses in the range *A*_{*i*} and *A*_{*j*} relate to datalines *D*_{*r*} and D_{*s*}, dataline *D*_{*r*} containing the value 0, dataline *D*_{*s*} containing the value 1. Upon tendering a digital signal to the PSC-RAM 20, data lines *D*_{*r*} and *D*_{*s*} produce pulse-frequency signals corresponding to integrated pulse-rates in portions of a pulse-height distribution at issue, said portions being determined by selection of addressing lines *A*_{*g*}, *A*_{*h*}, *A*_{*i*}, *A*_{*j*}. Said portions are preferably chosen symmetrically around a load maximum in the pulse-height distribution; however the present embodiment is suited for more sophisticated selections of addressing lines *A*_{*g*}, *A*_{*h*}, *A*_{*i*}, *A*_{*j*} depending on detailed shapes of peaks in the pulse-height distribution.

When signal amplitude from the first frequency-to-amplitude converter 24 is larger than a corresponding signal amplitude from the second frequency-to-amplitude converter 25, this is caused by a shift to lower energy of the pulse-height distribution. Then the differential integrator 26 provides a positive signal which causes, by way of the gain control circuit 16, to increase the amplification until the signal amplitudes generated by the first and second frequency-to-amplitude converters, respectively, have become equal. Then correspondingly, the pulse amplification is adjusted so that the count rates in a low-energy half and in a high-energy half of a relevant peak in a pulse-height-distribution are substantially equal.

Pulse-shift correction is both unnecessary and undesired when a count rate is lower than some predetermined level. In order to activate pulse-shift correction only when a count rate exceeds some predetermined level, an x-ray analysis apparatus in accordance with the present invention is provided with a count-rate-switch 27. The selection of wether or not performing pulse-shift correction is performed as follows. Frequency signals from the datalines *D*_{*r*} and *D*_{*s*} are supplied to the count-rate-switch. Provided one of said frequency signals exceeds some first predetermined threshold value then switches 28,29 are closed, so that the frequency-to-amplitude converters are connected to the differential integrator. Once the switches 28,29 have been closed, they remain closed unless both frequency signals from the datalines *D*_{*r*} and *D*_{*s*} decrease below some second predetermined threshold value, the second predetermined threshold value being lower than the first predetermined threshold value. When both frequency signals decrease below said predetermined second threshold value, then the switches 28,29 are opened. This mode of operation the count rate switch avoids unstable behaviour of the pulse-shift correction. Output of the pulse-height distribution produced by the x-ray analysis apparatus is carried out by way of an output buffer circuit 30.

Figure 3b shows another embodiment of a circuit for automatic pulse amplitude shift correction. In the embodiment according to Figure 3b the relevant datalines *D*_{*r*} and *D*_{*s*} of the PSC-RAM 20 are connected to respective digital counters 31 and 32. Counter 31 operates so as to count incoming pulses from the PSC-RAM in an ascending way. Counter 32 operates so as to count incoming pulses from the PSC-RAM is a descending way. The counters 31 and 32 are connected to an integration circuit 33 which supplies a signal to the gain control signal. The count rate switch controls switches 28 and 29 for connecting the counters 31 and 32 with the integration circuit in dependence of pulse-frequencies supplied by the relevant datalines of the PSC-RAM.

## Claims

1. An x-ray analysis apparatus comprising:
* a sample holder (2) for supporting a sample to be analyzed by the apparatus,
* an x-ray source (1) for providing an X-ray beam for irradiating the sample,
* an x-ray detector (6) for providing detector pulses on its output in response to detecting X-rays emanating from the sample,
* a pulse amplifier (16) having controllable gain, connected to the output of the detector, having a control input for receiving a correction signal for controlling the gain,
* detector reading circuit means (18) connected to the output of the pulse amplifier, comprising means for sorting detector pulses according to amplitude, the detector reading circuit means comprising:
- window circuit means (20) connected to the output of the pulse amplifier, the window circuit means defining successive mutually adjacent amplitude windows for the amplitudes of the detector pulses, the window circuit means being arranged for distinguishing detector pulses that fall within one of the amplitude windows,
- a comparator circuit (26 or 33) connected to the output of the window circuit means, the output of which is connected to the control input of the pulse amplifier for providing an output signal in response to the discrimination between the numbers of detector pulses in the first and in the second amplitude window, the output signal being supplied as the correction signal to the control input of the pulse amplifier,
characterised in that
* an A/D-convertor (17) is connected to the output of the pulse amplifier for converting the analog values of the amplitudes of the detector pulses into digital amplitude values, the output of the A/D-convertor being connected to the input of the window circuit means.
* the detector reading circuit comprises adress to data conversion means, the adress input being connected to the output of the A/D-convertor, the signal generator having a first and a second output (Dₛ , Dᵣ), the signal generator being arranged for providing on the first and the second output a first and a second pulse frequency signal respectively corresponding to the rate of incidence of x-ray photons producing pulses within the amplitude values of the relevant amplitude windows,
* the comparator circuit further comprises comparing means (26 or 33) connected to the outputs of the signal generators, arranged for providing the correction signal in response to the distinction between the pulse frequency signals.

2. An x-ray analysis apparatus as claimed in Claim 1, in which the window circuit means are constituted by a random-access memory.

3. An x-ray analysis apparatus as claimed in Claim 1, in which the window circuit means are constituted by a programmable read-only memory.

4. An x-ray analysis apparatus as claimed in Claim 1, in which the window circuit means are constituted by a programmable logical circuit.

5. An x-ray analysis apparatus as claimed in any one of Claims 1-4, in which said signal generators are constituted by frequency-to-amplitude converters, and in which the comparator circuit is constituted by a differential integrator.

6. An x-ray analysis apparatus as claimed in any one of Claims 1-4, in which said signal generators are constituted by a first counter operating in an ascending way, a second counter operating in a descending way, and an integration circuit.

7. An x-ray analysis apparatus as claimed in any one of the preceding Claims, in which the detector reading circuit means comprise a count rate switch for activating said comparator circuit in dependence of said pulse-frequency signals exceeding a threshold.

8. An x-ray analysis apparatus as claimed in any one of the preceding claims, in which the analog-to-digital converter is a Flash-analog-to-digital converter.

## Patentansprüche

1. Röntgenanalysegerät mit:
* einem Probenhalter (2) zum Tragen einer von dem Gerät zu analysierenden Probe
* einer Röntgenquelle (1) zum Liefern eines Röntgenstrahlenbündels zum Bestrahlen der Probe,
* einem Röntgendetektor (6), um in Reaktion auf das Detektieren von aus der Probe tretenden Röntgenstrahlen Detektorimpulse am Ausgang abzugeben,
* einem mit dem Ausgang des Detektors verbundenen Impulsverstärker (16) mit regelbarer Verstärkung und mit einem Steuereingang zum Empfang eines Korrektursignals zur Regelung der Verstärkung,
* mit dem Ausgang des Impulsverstärkers verbundenen Detektorleseschaltungsmitteln (18), die Mittel zum Sortieren von Detektorimpulsen entsprechend der Amplitude umfassen, wobei die Detektorleseschaltungsmittel umfassen:
- mit dem Ausgang des Impulsverstärkers verbundene Fensterschaltungsmittel (20), wobei die Fensterschaltungsmittel hintereinander zueinander benachbarte Amplitudenfenster für die Amplituden der Detektorimpulse definieren, wobei die Fensterschaltungsmittel zum Unterscheiden von Detektorimpulsen ausgebildet sind, die in eines der Amplitudenfenster fallen,
- eine mit dem Ausgang der Fensterschaltungsmittel verbundene Komparatorschaltung (26 oder 33), von der ein Ausgang mit dem Steuereingang des Impulsverstärkers verbunden ist, um in Reaktion auf den Unterschied zwischen den Anzahlen Detektorimpulsen in dem ersten und in dem zweiten Amplitudenfenster ein Ausgangssignal abzugeben, das als Korrektursignal dem Steuereingang des Impulsverstärkers zugeführt wird,
dadurch gekennzeichnet, dass
* ein A/D-Umsetzer (17) mit dem Ausgang des Impulsverstärkers verbunden ist, um die Analogwerte der Amplituden der Detektorimpulse in digitale Amplitudenwerte umzusetzen, wobei der Ausgang des A/D-Umsetzers mit dem Eingang der Fensterschaltungsmittel verbunden ist,
* die Detektorleseschaltung Adressen-Daten-Umsetzungsmittel umfasst, wobei der Adresseneingang mit dem Ausgang des A/D-Umsetzers verbunden ist, der Signalgenerator einen ersten und einen zweiten Ausgang (Dₛ, Dᵣ) hat, der Signalgenerator zum Abgeben eines ersten und eines zweiten Impulsfrequenzsignals am ersten und am zweiten Ausgang ausgebildet ist, das jeweils der Einfallsrate von Röntgenphotonen entspricht, die innerhalb der Amplitudenwerte der relevanten Amplitudenfenster Impulse erzeugen,
* die Komparatorschaltung weiterhin mit den Ausgängen der Signalgeneratoren verbundene Vergleichsmittel (26 oder 33) umfasst, die zum Abgeben des Korrektursignals in Reaktion auf die Unterscheidung zwischen den Impulsfrequenzsignalen ausgebildet sind.

2. Röntgenanalysegerät nach Anspruch 1, bei dem die Fensterschaltungsmittel von einem Direktzugriffsspeicher gebildet werden.

3. Röntgenanalysegerät nach Anspruch 1, bei dem die Fensterschaltungsmittel von einem programmierbaren Festwertspeicher gebildet werden.

4. Röntgenanalysegerät nach Anspruch 1, bei dem die Fensterschaltungsmittel von einer programmierbaren Logikschaltung gebildet werden.

5. Röntgenanalysegerät nach einem der Ansprüche 1-4, bei dem die genannten Signalgeneratoren von Frequenz-Amplitude-Wandlem gebildet werden und die Komparatorschaltung von einem Differentialintegrator gebildet wird.

6. Röntgenanalysegerät nach einem der Ansprüche 1-4, bei dem die genannten Signalgeneratoren von einem ersten aufwärts zählenden Zähler, einem zweiten abwärts zahlenden Zähler und einer Integrationsschaltung gebildet werden.

7. Röntgenanalysegerät nach einem der vorhergehenden Ansprüche, bei dem die Detektorleseschaltungsmittel einen Zählratenschalter umfassen zum Aktivieren der genannten Vergleichsschaltung in Abhängigkeit von den genannten, eine Schwelle überschreitenden Impulsfrequenzsignalen.

8. Röntgenanalysegerät nach einem der vorhergehenden Ansprüche, wobei der Analog-Digital-Umsetzer ein Flash-Analog-Digital-Umsetzer ist.

## Revendications

1. Appareil d'analyse à rayons X comprenant :
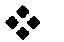 un porte-échantillons (2) pour supporter un échantillon à analyser par l'appareil;
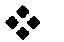 une source de rayons X (1) pour fournir un faisceau de rayons X pour irradier l'échantillon;
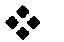 un détecteur de rayons X (6) pour fournir des impulsions de détection sur sa sortie en réaction à des rayons X de détection émanant de l'échantillon;
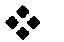 un amplificateur d'impulsions (16) présentant un gain commandable, relié à la sortie du détecteur, présentant une entrée de commande pour recevoir un signal de correction pour la commande de gain, et
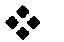 des moyens de circuit de lecture de détecteur (18) reliés à la sortie de l'amplificateur d'impulsions, comprenant des moyens de triage des impulsions de détecteur suivant l'amplitude, les moyens de circuit de lecture de détecteur comprenant :
- des moyens de circuit de fenêtre (20) reliés à la sortie de l'amplificateur d'impulsions, les moyens de circuit de fenêtre définissant successivement des fenêtres d'amplitude mutuellement adjacentes pour les amplitudes des impulsions de détecteur, les moyens de circuit de fenêtre étant arrangés pour distinguer les impulsions de détecteur qui tombent dans l'une des fenêtres d'amplitude,
- un circuit comparateur (26 ou 33) relié à la sortie des moyens de circuit de fenêtre, dont la sortie est reliée à l'entrée de commande de l'amplificateur d'impulsions pour fournir un signal de sortie en réaction à la discrimination entre les nombres d'impulsions de détecteur dans la première et dans la deuxième fenêtre d'amplitude, le signal de sortie étant fourni à titre de signal de correction à l'entrée de commande de l'amplificateur d'impulsions,
caractérisé en ce que
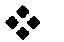 un convertisseur analogique/numérique (17) est relié à la sortie de l'amplificateur d'impulsions pour convertir en valeurs d'amplitude numériques les valeurs analogiques des amplitudes des impulsions de détecteur, la sortie du convertisseur analogique/numérique étant reliée à l'entrée des moyens de circuit de fenêtre;
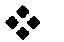 le circuit de lecture de détecteur comprend des moyens de conversion adresse en donnée, l'entrée d'adresse étant reliée à la sortie du convertisseur analogique/numérique, le producteur de signaux ayant une première et une deuxième sortie (*D*_{*s*} *D*_{*r*}), le producteur de signaux étant arrangé pour fournir sur la première et la deuxième sortie un premier et un deuxième signal de fréquence d'impulsions respectivement correspondant à la cadence d'incidence des photons de rayons X produisant des impulsions à l'intérieur des valeurs d'amplitude des fenêtres d'amplitude relatives, et
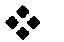 le circuit comparateur comprend en outre des moyens de comparaison (26 ou 33) reliés aux sorties des producteurs de signaux, arrangés pour fournir le signal de correction en réaction à la distinction entre les signaux de fréquence d'impulsions.

2. Appareil d'analyse à rayons X suivant la revendication 1, dans lequel les moyens de circuit de fenêtre sont constitués d'une mémoire à accès direct.

3. Appareil d'analyse à rayons X suivant la revendication 1, dans lequel les moyens de circuit de fenêtre sont constitués d'une mémoire à lecture seule programmable.

4. Appareil d'analyse à rayons X suivant la revendication 1, dans lequel les moyens de circuit de fenêtre sont constitués d'un circuit logique programmable.

5. Appareil d'analyse à rayons X suivant l'une quelconque des revendications 1 à 4, dans lequel lesdits producteurs de signaux sont constitués de convertisseurs fréquence/amplitude, et dans lequel le circuit comparateur est constitué d'un intégrateur différentiel.

6. Appareil d'analyse à rayons X suivant l'une quelconque des revendications 1 à 4, dans lequel lesdits producteurs de signaux sont constitués d'un premier dispositif de comptage fonctionnant d'une manière ascendante, d'un deuxième dispositif de comptage fonctionnant d'une manière descendante, et d'un circuit d'intégration.

7. Appareil d'analyse à rayons X suivant l'une quelconque des revendications précédentes, dans lequel les moyens de circuit de lecture de détecteur comprennent un commutateur de cadence de comptage pour activer ledit circuit comparateur en fonction desdits signaux de fréquence d'impulsions dépassant un seuil.

8. Appareil d'analyse à rayons X suivant l'une quelconque des revendications précédentes, dans lequel le convertisseur analogique/numérique est un numériseur parallèle.
